# EUROPÄISCHE PATENTSCHRIFT

(11) **EP 0 609 805 B1**
(45) Veröffentlichungstag und Bekanntmachung des Hinweises auf die Patenterteilung: **22.11.2000**
(21) Anmeldenummer: 94101388.0
(22) Anmeldetag: 31.01.1994
(51) Int. Cl.: C12C 7/00, C12C 5/02, C12C 7/06

(54) **Vorrichtung zur Herstellung von Würze**
Device for the preparation of wort
Dispositif pour la préparation de moût

(30) Priorität: 01.02.1993 DE 4302729
(43) Veröffentlichungstag der Anmeldung: 10.08.1994
(73) Patentinhaber: ANTON STEINECKER ENTWICKLUNGS GmbH & Co., D-85318 Freising (DE)
(72) Erfinder: Wirth, Karl-Dieter Andreas, D-89335 Ichenhausen (DE)
(74) Vertreter: Grünecker, Kinkeldey, Stockmair & Schwanhäusser Anwaltssozietät

(56) Entgegenhaltungen:
- GB-A- 2 109 809
- US-A- 2 042 284
- US-A- 4 397 872

## Beschreibung

Die Erfindung bezieht sich auf eine Vorrichtung zur Herstellung von Würze mit einem Rohfruchtkocher und mit einer Maischbottichpfanne, wobei der Rohfruchtkocher mit einem Malzersatzstoffbehälter über einen Ersatzstoffwäscher und mit einem Malzschrotbehälter verbunden ist, und die Maischbottichpfanne mit dem Malzschrotbehälter über ein mit einer Wasserzuführung verbundenes Einmaischgefäß und über eine Pumpe verbunden ist.

Eine derartige bekannte Vorrichtung wird zum Brauen von beispielsweise Ausfuhrbieren verwendet, wobei die beim Mälzungsprozeß auftretenden Mälzungsverluste umgangen werden, indem stärkehaltige Malzersatzstoffe in einem bestimmten Anteil zum Brauen benutzt werden. Bei dieser Vorrichtung sind der Malzersatzstoffbehälter und der Ersatzstoffwäscher oberhalb des Rohfruchtkochers in einer Linie angeordnet. Dadurch wird der Ersatzstoff aufgrund der Schwerkraft in den Rohfruchtkocher gefördert. Nachteilig ist hierbei, daß diese Vorrichtung eine große Bauhöhe aufweist, was sowohl einen großen Platzbedarf erforderlich macht, als auch die Herstellungskosten und Baukosten erhöht.

Die Aufgabe der Erfindung besteht somit darin, die Vorrichtung der eingangs genannten Art derart weiterzuentwickeln, daß die Bauhöhe vermindert wird und Herstellungskosten eingespart werden.

Die Lösung dieser Aufgabe erfolgt erfindungsgemäß durch ein Kombinationsgefäß, welches als Ersatzstoffwäscher und Einmaischgefäß ausgebildet ist. Damit entfällt bei der erfindungsgemäßen Vorrichtung der bekannte separate Ersatzstoffwäscher, da nun das Kombinationsgefäß sowohl als Ersatzstoffwäscher als auch als Einmaischgefäß dient und in einer Schroterei aufgestellt werden kann. Üblicherweise ist das Kombinationsgefäß innerhalb der Vorrichtung an der gleichen Stelle angeordnet wie das im Stand der Technik bekannte Einmaischgefäß. Die Bauhöhe der erfindungsgemäßen Vorrichtung verringert sich somit um die Länge des separaten Ersatzstoffwäschers. Weiterhin verringern sich die Herstellungskosten der Vorrichtung, da anstelle des bekannten separaten Ersatzstoffwäschers und des bekannten separaten Einmaischgefäßes nun ein einziges Kombinationsgefäß ausreichend ist. Trotz der nun tieferliegenden Anordnung des Ersatzstoffwäschers kann der Ersatzstoff auch weiterhin in den Rohfruchtkocher gefördert werden, da die Pumpe zur Förderung der Maische in die Maischbottichpfanne auch den Ersatzstoff und den Malzschrot in den Rohfruchtkocher fördert.

Damit Verunreinigungen des Ersatzstoffes nicht in den Rohfruchtkocher gelangen, sieht eine besonders bevorzugte Ausführungsform vor, daß das Kombinationsgefäß an seinem Auslauf und/oder Überlauf je ein Sieb aufweist.

Zur besseren Durchmischung des Ersatzstoffes beim Waschen sieht eine weitere Ausgestaltung der Erfindung vor, daß das Kombinationsgefäß mit einer Druckluftleitung verbunden ist.

Eine Weiterbildung der Erfindung sieht vor, daß in dem Kombinationsgefäß eine Mischvorrichtung zum Einmaischen angeordnet ist. Damit kann die in dem auch als Einmaischgefäß ausgebildeten Kombinationsgefäß eingebrachte Maische gut durchmischt werden.

Um lichte und trockene Biere zu erhalten, ist der Malzersatzstoff zweckmäßigerweise Reis. Denkbar sind aber auch andere Ersatzstoffe des Malzes, wie beispielsweise Mais, ungemälzte Gerste oder Weizen.

Die Erfindung wird nachstehend anhand der Zeichnung näher erläutert.

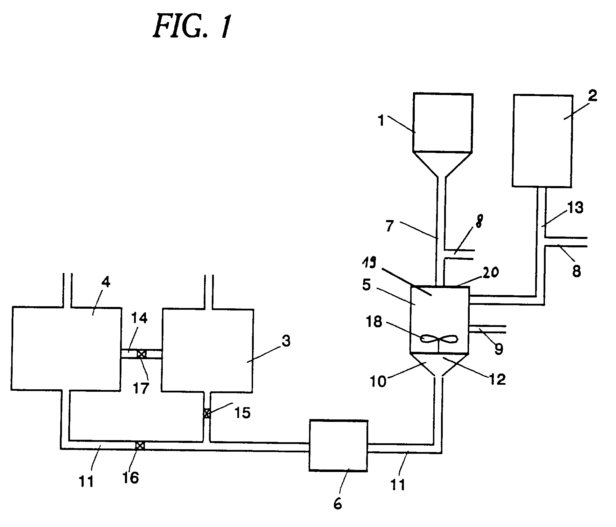

Fig. 1 zeigt ein Ausführungsbeispiel der Erfindung.

Die erfindungsgemäße Vorrichtung besteht aus einem Malzersatzstoffbehälter 1, einem Malzschrotbehälter 2, einem Rohfruchtkocher 4, einer Maischbottichpfanne 3, einem Kombinationsgefäß 5 und einer Pumpe 6. Das Kombinationsgefäß 5 ist sowohl als Ersatzstoffwäscher als auch als Einmaischgefäß ausgebildet. Beim Betrieb der Vorrichtung gelangt der Ersatzstoff aus dem Malzersatzstoffbehälter 1 über die Verbindungsleitung 7 in das Kombinationsgefäß 5, welches mit einer Wasserzuführung 8 verbunden ist. In dem als Ersatzstoffwäscher ausgebildeten Kombinationsgefäß 5 wird nun der Ersatzstoff mittels Wasser über die Wasserzuführung 8 gewaschen. Zur besseren Durchmischung des Ersatzstoffes wird über eine Druckluftleitung 9, welche mit dem Kombinationsgefäß 5 verbunden ist, Druckluft zugeführt. Nach dem Waschvorgang gelangt der Ersatzstoff über einen Ausfluß 10 des Kombinationsgefäßes 5 in eine Pumpenleitung 11, welche mit der Pumpe 6 verbunden ist, und wird mittels der Pumpe 6 in den Rohfruchtkocher 4 gefördert. Der Auslauf 10 und der Überlauf 19 weisen je ein Sieb 12, 20 auf, welche gröbere Verunreinigungen des Ersatzstoffes zurückhalten. Dem gewaschenen Ersatzstoff im Rohfruchtkocher 4 wird noch etwas Malzschrot zugesetzt. Hierzu wird der Malzschrot aus dem Malzschrotbehälter 2 über eine Verbindungsleitung 13 in das Kombinationsgefäß 5 gefördert und anschließend über die Verbindungsleitung 11 mittels der Pumpe 6 in den Rohfruchtkocher gefördert. Zusätzlich kann über die Wasserzuführung 8 noch Wasser zugeführt werden.

Aus dem Malzschrotbehälter 2 gelangt Malzschrot über die Verbindungsleitung 13 in das auch als Einmaischgefäß ausgebildete Kombinationsgefäß 5. Auf dem Weg dorthin wird es mit Wasser, welches über die Wasserzuführung 8 in das Kombinationsgefäß 5 gelangt, versetzt und mittels einer in dem Kombinationsgefäß 5 angeordneten Mischvorrichtung 18 durchgemischt. Nach dem Einmaischvorgang gelangt die Maische über die Pumpenleitung 11 mittels der Pumpe 6 in die Maischbottichpfanne 3. In diese Maischbottichpfanne 3 wird auch der Inhalt des Rohfruchtkochers 4 über eine Verbindungsleitung 14, welche den Rohfruchtkocher 4 mit der Maischbottichpfanne 3 verbindet, gefördert. Das Gemisch aus dem Inhalt des Rohfruchtkochers 4 und der Maische, die Würze, wird anschließend in der Maischbottichpfanne 3 zur weiteren Verarbeitung erhitzt.

Damit die Pumpenleitung 11 wahlweise mit der Maischbottichpfanne 3 oder dem Rohfruchtkocher 4 verbunden ist, sind in der Pumpenleitung 11 steuerbare Ventile zur strömungsmäßigen Verbindung der Pumpenleitung 11 mit der Maischbottichpfanne 3 bzw. dem Rohfruchtkocher 4 vorgesehen. Ebenso weist die Verbindungsleitung 14 ein steuerbares Ventil 17 auf.

Durch die Ausbildung des Ersatzstoffwäschers und des Einmaischgefäßes in einem Kombinationsgefäß 5, welches auf der gleichen Ebene wie der Rohfruchtkocher 4 und die Maischbottichpfanne 3 angeordnet ist, ergibt sich eine flache Bauhöhe der Vorrichtung. Weiterhin werden die Herstellungskosten der Vorrichtung gesenkt, da anstelle eines separaten Ersatzstoffwäschers und eines separaten Einmaischgefäßes nun ein Kombinationsgefäß vorgesehen ist.

## Patentansprüche

1. Vorrichtung zur Herstellung von Würze mit einem Rohfruchtkocher (4) und mit einer Maischbottichpfanne (3), wobei der Rohfruchtkocher (4) mit einem Malzersatzstoffbehälter (1) über einen Ersatzstoffwäscher und mit einem Malzschrotbehälter (2) verbunden ist, und die Maischbottichpfanne (3) mit dem Malzschrotbehälter (2) über ein mit einer Wasserzuführung (8) verbundenes Einmaischgefäß und über eine Pumpe (6) verbunden ist,
**gekennzeichnet** durch
ein Kombinationsgefäß (5), welches als Ersatzstoffwäscher und Einmaischgefäß ausgebildet ist.

2. Vorrichtung nach Anspruch 1, dadurch gekennzeichnet, daß das Kombinationsgefäß (5) an seinem Auslauf (10) und/oder Überlauf (19) je ein Sieb (12, 20) aufweist.

3. Vorrichtung nach Anspruch 1 oder 2, dadurch gekennzeichnet, daß das Kombinationsgefäß (5) mit einer Druckluftleitung (9) verbunden ist.

4. Vorrichtung nach wenigstens einem der vorhergehenden Ansprüche, dadurch gekennzeichnet, daß in dem Kombinationsgefäß (5) eine Mischvorrichtung (18) zum Einmaischen angeordnet ist.

## Claims

1. A device for preparing wort, comprising a raw grain cooker (4) and a mash tun (3), the raw grain cooker (4) being connected to a malt substitute bin (1) via a substitute washer and to a grist bin (2), and the mash tun (3) being connected to the grist bin (2) via a mashing vessel connected to a water supply (8) and via a pump (6),
**characterized by**
a combination bin (5) which is designed as a substitute washer and a mashing vessel.

2. The device according to claim 1, characterized in that the combination bin (5) comprises a respective sieve (12, 20) at the outlet (10) thereof and/or the overflow (19) thereof.

3. The device according to claim 1 or 2, characterized in that the combination bin (5) is connected to a compressed air line (9).

4. The device according to at least one of the preceding claims, characterized in that a mixing device (18) is arranged in the combination bin (5) for mashing purposes.

## Revendications

1. Dispositif pour la préparation de moût, comprenant un cuiseur (4) pour le grain cru et une cuve-matière (3), le cuiseur (4) pour le grain cru étant relié à un réservoir (1) pour l'adjuvant du malt par le biais d'un laveur d'adjuvant du malt et à un réservoir (2) pour la mouture, et la cuvematière (3) étant reliée au réservoir (2) pour la mouture par le biais d'un récipient pour empâter relié à une alimentation en eau (8) et par le biais d'une pompe (6), caractérisé par un récipient combiné (5) exécuté en tant que laveur d'adjuvant du malt et récipient pour empâter.

2. Dispositif selon la revendication 1, caractérisé en ce que le récipient combiné (5) est pourvu d'un tamis (12, 20) au niveau de sa sortie (10) et/ou de son déversoir (19).

3. Dispositif selon l'une des revendications 1 ou 2, caractérisé en ce que le récipient combiné (5) est relié à une conduite d'air comprimé (9).

4. Dispositif selon au moins une des revendications précédentes, caractérisé en ce qu'un dispositif mélangeur (18) est situé dans le récipient combiné (5) en vue de l'empâtage.
